# EUROPEAN PATENT SPECIFICATION

(11) **EP 1 457 442 B1**
(45) Date of publication and mention of the grant of the patent: **28.05.2008**
(21) Application number: 04101041.4
(22) Date of filing: 12.03.2004
(51) Int. Cl.: B65G 57/06, B65G 57/24

(54) **Palletizing machine**
Palettiervorrichtung
Palettiseur

(30) Priority: 14.03.2003 IT TO20030194
(43) Date of publication of application: 15.09.2004
(73) Proprietor: OMA S.r.l., 37069 Villafranca di Verona (IT)
(72) Inventor: Baldi, Giampietro, 37069 Villafranca di Verona (IT)
(74) Representative: Jorio, Paolo

(56) References cited:
- EP-A- 1 321 396
- FR-A- 2 696 711
- GB-A- 2 003 818

## Description

The present invention relates to a palletizing machine.

As is known, in the packing industry, there are numerous types of palletizing machines for fully automatically converting a succession of loose boxed products into a succession of pallets, each comprising a given number of layers of products stacked on a supporting pallet to form a single block for convenient transport.

To make currently marketed palletizing machines more compact, the Applicant, over the past year, has designed, patented, and marketed a new palletizing machine model featuring various highly innovative technical solutions enabling a drastic reduction in the overall size of the machine, while at the same time improving efficiency and flexibility, with no reduction whatsoever in hourly output.

The palletizing machine in question substantially comprises: a work platform where each pallet is formed in succession; a first linear conveyor for removing each completed pallet from the work platform; a second linear conveyor for supplying a succession of loose boxed products alongside the work platform; and an orienting and compacting unit for orienting and compacting the loose boxed products from the second linear conveyor to form the rows of products which eventually successively form each layer in the pallet.

The palletizing machine described above also has a layer building unit for receiving each row of products from the orienting and compacting unit; transferring the row of products immediately over the top of the pallet being formed on the work platform; moving the row of products up to the other rows of products already over the top of the pallet being formed, so as to build the layer of products directly over the top of the pallet; and depositing the completed layer of products by gravity directly onto the top of the pallet being formed on the work platform.

The layer building unit in question comprises a layer building platform movable vertically over the work platform, and which acts as a supporting surface on which each layer of the pallet is formed before being deposited onto the top of the pallet being formed on the work platform; and a product row transfer platform movable vertically in the space between the layer building platform and the orienting and compacting unit, to transfer one or more rows of products at a time from the orienting and compacting unit to the above cited building platform.

The rows of products are transferred from the orienting and compacting unit to the transfer platform with the aid of a first push member fitted to the orienting and compacting unit, and are transferred from the transfer platform to the layer building platform with the aid of a second push member fitted to the layer building platform.

A palletizing machine according to the preamble of claim 1 is also known from GB 2 003 818 A.

It is an object of the present invention to further improve the above palletizing machines to make it even more compact, while at the same time improving flexibility, reliability and output rate.

According to the present invention, there is provided a palletizing machine for converting a succession of individual products into a succession of pallets, each defined by a given number of stacked layers of products; each layer of products being defined by a number of adjacent rows of products; the palletizing machine comprising a work platform where each pallet is formed in succession, a linear conveyor for supplying a succession of loose products alongside the work platform, and an orienting and compacting unit for orienting and compacting the products, and which receives the loose products from said linear conveyor at the input, and supplies a succession of rows of products at the output; the palletizing machine being characterized by also comprising a layer building unit, which in turn comprises a layer building platform movable over said work platform and for forming each layer of products and then depositing the layer by gravity onto the top of the pallet being formed on the work platform; a row transfer platform movable vertically alongside said building platform to transfer one or more rows of products at a time from said orienting and compacting unit to said building platform; and one push member for moving one or more rows of products at a time from said orienting and compacting unit to said transfer platform, and from said transfer platform to said building platform.

A non-limiting embodiment of the present invention will be described by way of example with reference to the accompanying drawings, in which:
Figure 1 shows a side view, with parts in section and parts removed for clarity, of a palletizing machine in accordance with the teachings of the present invention;
Figure 2 shows a plan view, with parts removed for clarity, of the Figure 1 palletizing machine;
Figures 3 and 4 show a plan view and a side view respectively, with parts in section and parts removed for clarity, of a component part of the palletizing machine in Figures 1 and 2;
Figures 5, 6 and 7 show three side views of the Figure 1 palletizing machine in three operating positions.

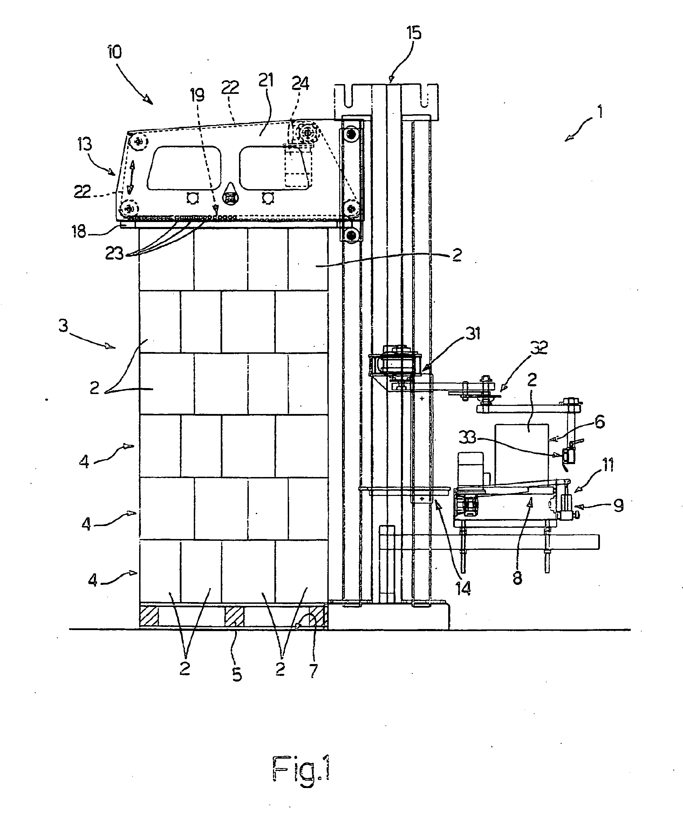

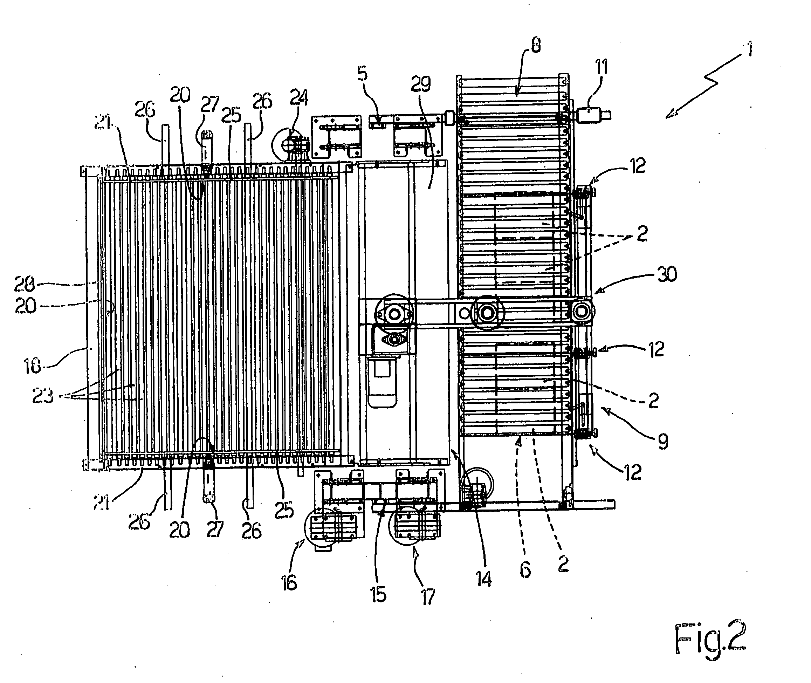

With reference to Figures 1 and 2, number 1 indicates as a whole a palletizing machine for automatically converting a succession of individual products 2 into a succession of pallets 3, each defined by a given number of layers 4 of products stacked on a generic supporting pallet 5 to form a single block for convenient transport.

In the example shown, pallet 3 is defined by six layers 4 of products, each defined by four parallel, adjacent rows 6 of products; and each row 6 of products is defined by five side by side, parallelepiped-shaped, individual boxed products 2.

Palletizing machine 1 comprises: a work platform 7 where each pallet 3 is formed in succession; a linear conveyor 8 for supplying a succession of loose products 2 alongside work platform 7; and a product orienting and compacting unit 9 located alongside work platform 7 to orient and compact the loose products 2 from linear conveyor 8 into rows 6 of products eventually and successively forming each layer 4 of pallet 3.

Palletizing machine 1 also comprises a layer building unit 10 which successively removes each completed row 6 of products from orienting and compacting unit 9; transfers row 6 of products directly over the top of pallet 3 being formed on work platform 7; moves row 6 of products up to any other rows 6 of products already over the top of pallet 3 being formed on work platform 7, so as to compose layer 4 of products directly over the top of pallet 3; and deposits the completed layer 4 of products by gravity directly onto the top of pallet 3 being formed on work platform 7.

It should be pointed out that, in the example shown, one row 6 of products is transferred at a time over the top of pallet 3, though two or more rows 6 may be transferred at a time, providing, obviously, that the total number of rows 6 transferred simultaneously over the top of pallet 3 being formed on work platform 7 is less than the total number of rows 6 of products in each layer 4 of pallet 3.

With reference to Figures 1 and 2, in the example shown, work platform 7 is defined by a portion of the bed of palletizing machine 1, and linear conveyor 8 is defined by a conventional roller conveyor with the output end located alongside work platform 7.

Orienting and compacting unit 9, on the other hand, is incorporated in the output end of linear conveyor 8, and comprises a presence sensor 11 for detecting the passage of product 2 into orienting and compacting unit 9; a number of movable stops 12 which, on command, orient and arrest products 2 in predetermined manner as products 2 reach the output end of linear conveyor 8; and a control unit (not shown) for controlling movable stops 12 as a function of signals from presence sensor 11.

More specifically, movable stops 12 are appropriately spaced along the conveying surface of linear conveyor 8, so that each engages the gap between two adjacent rollers, and are movable, on command, between a work position, in which they project above the conveying surface to arrest products 2, and a rest position, in which they are located beneath the conveying surface of linear conveyor 8 to allow products 2 through.

With reference to Figures 1, 2, 3 and 4, layer building unit 10 comprises a layer building platform 13 for forming each layer 4 of pallet 3 before depositing it onto the top of pallet 3 being formed on work platform 7; and a row transfer platform 14 for transferring one or more rows 6 of products at a time from orienting and compacting unit 9 to building platform 13.

Layer building platform 13 is mounted to move vertically over work platform 7, and row transfer platform 14 is mounted to move vertically inside the space between orienting and compacting unit 9 and work platform 7.

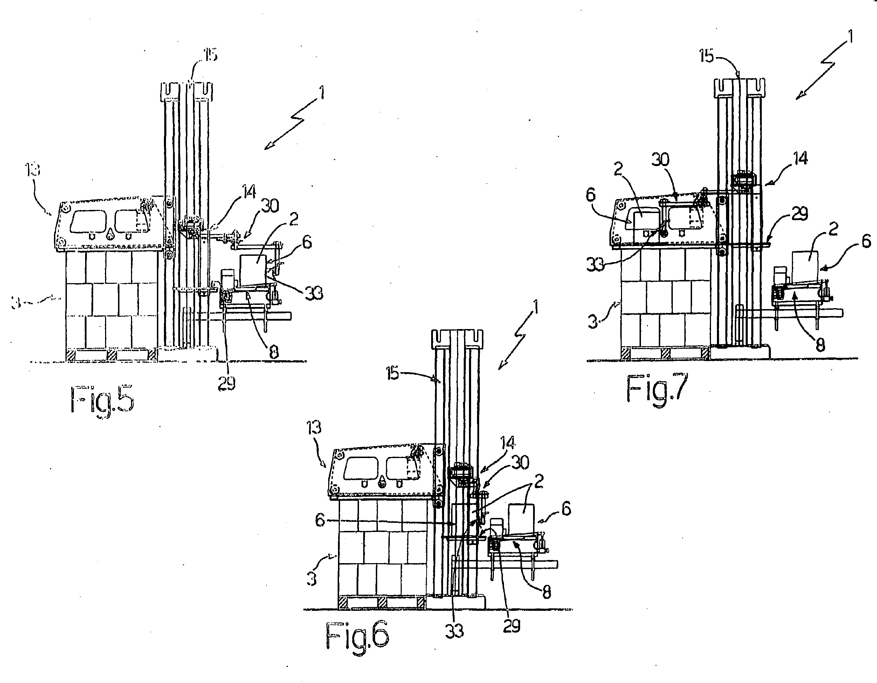

More specifically, transfer platform 14 is movable vertically between a loading position (Figure 5), in which it is located alongside orienting and compacting unit 9, i.e. at the output end of linear conveyor 8, to receive at least one row 6 of products from linear conveyor 8, and an unloading position (Figure 7), in which it is located alongside building platform 13, whatever the height of building platform 13, to transfer the previously loaded row or rows 6 of products to building platform 13.

It should be pointed out that transfer platform 14 is sized to transfer a predetermined number of rows 6 at a time from orienting and compacting unit 9 to building platform 13; which number is always less than the total number of rows 6 of products in each layer 4 of pallet 3.

In the example shown, transfer platform 14 is designed to transfer one row 6 of products at a time from orienting and compacting unit 9 to building platform 13.

With reference to Figures 1 and 2, in the example shown, palletizing machine 1 comprises, astride work platform 7, a gantry-type supporting frame 15, to which both building platform 13 and transfer platform 14 are fitted to move vertically.

More specifically, supporting frame 15 is located between work platform 7 and orienting and compacting unit 9; and building platform 13 and transfer platform 14 are both mounted to run along the vertical posts of the frame on opposite sides of the frame. In the example shown, layer building platform 13 projects from the perimeter of supporting frame 15 so as to move vertically over work platform 7, while transfer platform 14 is mounted to run along the two vertical posts, so as to move vertically inside the gap defined by the two vertical posts of supporting frame 15.

Palletizing machine 1 obviously also comprises actuating means 16 and 17 for respectively moving building platform 13 and transfer platform 14 along the vertical posts of supporting frame 15, so as to position building platform 13 directly over the top of pallet 3 being formed on work platform 7, and move transfer platform 14, on command, between the loading ad unloading position.

With reference to Figures 1 and 2, layer building platform 13 is defined by a horizontal shelf with a central unloading hatch, and by a number of movable locators for compacting and retaining over the hatch the rows 6 of products in each layer of pallet 3.

More specifically, the horizontal shelf is mounted to move vertically, along the vertical posts of supporting frame 15, over work platform 7, and has a central unloading hatch through which each layer 4 of products formed on the shelf is dropped directly onto the top of pallet 3 being formed on work platform 7.

In the example shown, building platform 13 comprises a rectangular supporting rim 18 mounted to run horizontally along the two vertical posts of supporting frame 15, so as to move vertically over work platform 7; a movable shutter 19 located on the bottom of supporting rim 18 to selectively close the space inside the rim and define a horizontal supporting surface on which each layer 4 of pallet 3 is gradually formed; and a number of movable locators 20 for selectively compacting and retaining in the centre of supporting rim 18 the rows 6 of products in each layer of pallet 3.

More specifically, in the example shown, supporting rim 18 comprises two vertical sides 21, each connecting supporting rim 18 to a corresponding vertical post of the frame, is located over work platform 7 so that pallet 3 being formed on work platform 7 is substantially aligned with the centre of supporting rim 18, and is so sized that pallet 3 engages the space inside supporting rim 18.

Movable shutter 19 is fitted to supporting rim 18 to move between a closed position, in which it engages the space inside supporting rim 18 to define the horizontal supporting surface on which each layer 4 of pallet 3 is formed, and an open position, in which the space inside supporting rim 18 is cleared to allow the layer 4 of products to drop directly onto the top of pallet 3 being formed on work platform 7.

With reference to Figures 1 and 2, in the example shown, movable supporting shutter 19 is defined by a powered roller shutter 19, which substantially comprises two drive chains 22, each fitted movably to a corresponding vertical side 21 of supporting rim 18; a number of horizontal supporting rollers 23 extending astride the two drive chains 22, with each of the two axial ends fitted in freely rotating manner to a respective drive chain 22; and an electric motor 24 connected mechanically to both drive chains 22 to drive the chains synchronously.

More specifically, each drive chain 22 is looped about a number of toothed wheels fitted in rotary manner to the corresponding vertical side 21 of supporting rim 18, and supporting rollers 23 are equally spaced, astride the two drive chains 22, along the bottom horizontal portions of the two chains extending parallel to the lateral edges of supporting rim 18, at the bottom of rim 18.

With reference to Figures 1 and 2, electric motor 24, on command, moves the two drive chains 22 back and forth to move supporting rollers 23, on command, between a first operating position, in which supporting rollers 23 fully engage the bottom of supporting rim 18 to define the horizontal supporting surface on which each layer 4 of pallet 3 is formed, and a second operating position, in which supporting rollers 23 clear the bottom of supporting rim 18 to allow the layer 4 of products to drop by gravity directly onto the top of pallet 3 being formed on work platform 7.

Movable supporting shutter 19 is closed when supporting rollers 23 are in the first operating position, and is open when supporting rollers 23 are in the second operating position.

With reference to Figure 2, in the example shown, building platform 13 is equipped with three movable locators 20 arranged along three of the four sides of supporting rim 18.

In the example shown, two movable locators 20 are provided at vertical sides 21 of supporting rim 18, and each comprise a horizontal bar 25 extending parallel to the corresponding side of supporting rim 18 and supported by two horizontal guide rods 26 fitted in axially sliding manner to the corresponding vertical side 21 of supporting rim 18; and a linear actuator 27 which, on command, moves horizontal bar 25 horizontally to and from an operating position in which horizontal bar 25 rests against the facing outer peripheral edge of layer 4 of pallet 3.

The third movable locator 20 is defined by a horizontal bar 28 located, in a fixed but adjustable position, astride the two vertical sides 21 of supporting rim 18, on the opposite side to supporting frame 15.

With reference to Figures 1, 3 and 4, transfer platform 14 comprises a substantially rectangular horizontal shelf 29, the two short lateral edges of which are mounted to run along the two vertical posts of the frame, so as to move vertically inside the space defined by the two vertical posts of supporting frame 15, by orienting and compacting unit 9, and by building platform 13; and a push member 30 which selectively pushes the stationary row/s 6 of products in orienting and compacting unit 9 horizontally straight onto horizontal shelf 29, by pushing it/them horizontally on the conveying surface of linear conveyor 8 in a direction crosswise to the travelling direction of products 2, or pushes the stationary row/s 6 of products on horizontal shelf 29 horizontally straight onto building platform 13, i.e. onto supporting rollers 23 of movable supporting shutter 19.

It should be pointed out that horizontal shelf 29 is sized to accommodate a number of rows 6 of products smaller than the number of rows 6 of products in each layer 4 of pallet 3; rows 6 obviously being arranged parallel and side by side. In the example shown, horizontal shelf 29 is sized to accommodate and then transfer one row 6 of products to building platform 13. More specifically, the horizontal shelf is of a length and width approximately equal to but no smaller than the length and width respectively of each row 6 of products.

With reference to Figures 2, 3 and 4, push member 30 is fixed rigidly to and over horizontal shelf 29, and comprises: a supporting member 31 mounted to move vertically along the vertical posts of supporting frame 15, over and integrally with horizontal shelf 29; an articulated arm 32, with a pantograph movement, fixed to and projecting from supporting member 31 to move pantograph-fashion in a predetermined horizontal plane; and a horizontal push beam 33 which is positioned resting against the lateral side of the whole stationary row 6 of products in orienting and compacting unit 9, and is fixed to the free end of articulated arm 32 to push row 6 horizontally.

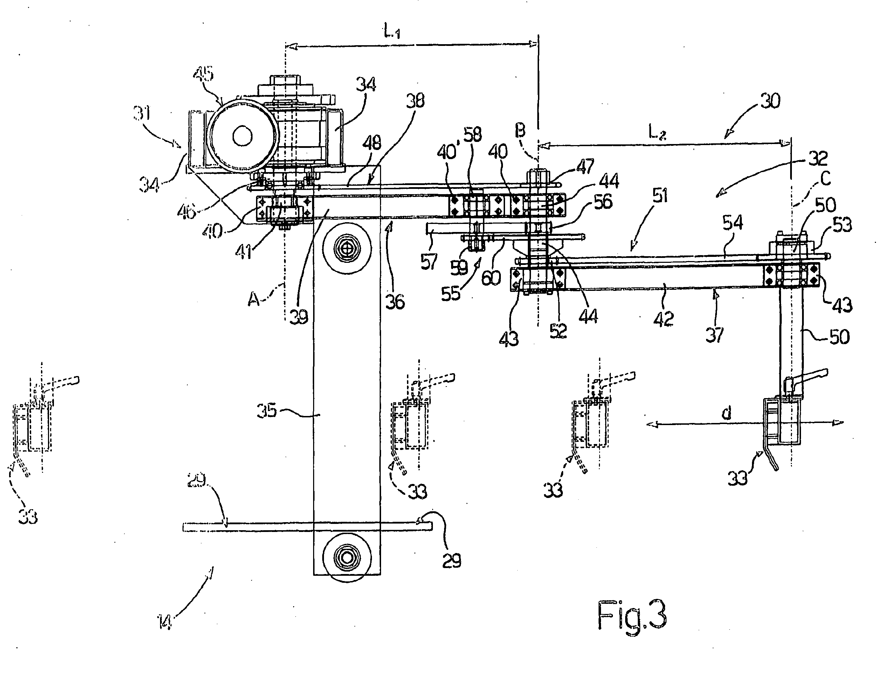

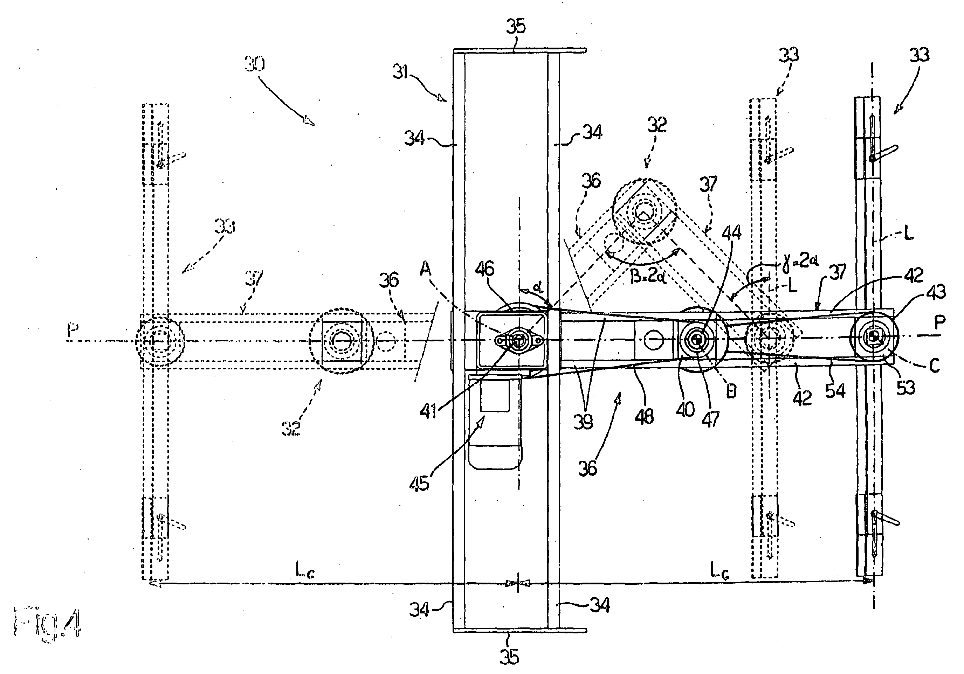

With reference to Figures 3 and 4, in the example shown, supporting member 31 comprises two horizontal cross members 34 extending parallel and facing each other over horizontal shelf 29, with their axial ends fixed rigidly to the same slides 35 by which horizontal shelf 29 is supported and runs vertically along the vertical posts of supporting frame 15 alongside building platform 13; and a stiffening plate connecting the central portions of both horizontal cross members 34. The two horizontal cross members 34 thus move vertically together with horizontal shelf 29, under the control of actuating means 17.

With reference to Figures 1, 2, 3 and 4, the articulated pantograph-movement arm 32 comprises: a first horizontal half-arm, hereinafter indicated 36, fitted to the two horizontal cross members 34 to rotate, with respect to them, about a vertical axis A; a second horizontal half-arm, hereinafter indicated 37, fitted to the free end of half-arm 36 to rotate freely, with respect to it, about an axis B parallel to axis A; and a cascade gear train 38 for transmitting the rotation of half-arm 36 about axis A to the body of half-arm 37, so that the body of half-arm 37 is forced to rotate about axis B in the opposite direction to and at an angular speed proportional to the angular speed with which half-arm 36 rotates about axis A.

In other words, cascade gear train 38 transmits the rotation of half-arm 36 about axis A to the body of half-arm 37 to coordinate scissor-opening of half-arms 36 and 37 with rotation of half-arm 36 about axis A.

Half-arms 36 and 37 are positioned horizontally one over the other, and horizontal beam 33 is fixed beneath half-arm 37 at a distance L₂ from axis B equal to the distance L₁ between axes A and B.

More specifically, in the example shown, horizontal beam 33 extends parallel to horizontal cross members 34 and to the longitudinal axis of horizontal shelf 29, and is fixed to the body of half-arm 37 to project beneath the body of half-arm 37, substantially coaxially with a third axis C parallel to axes A and B and located at a distance L₂ from axis B equal to the distance L₁ between axes A and B.

Cascade gear train 38 transmits motion from one half-arm to the other with a gear ratio of two to one, so that the angular speed at which half-arm 37 rotates about axis B with respect to half-arm 36 is always twice the angular speed at which half-arm 36 rotates about axis A with respect to supporting member 31.

Given the equal "useful lengths" or distances between the axes of the two half-arms 36 and 37, i.e. the equal distances L₁ and L₂ between axes A, B and C, and given the particular gear ratio of cascade gear train 38, scissor-opening of half-arms 36 and 37 can be coordinated with rotation of half-arm 36 about axis A, so that rotation of half-arm 36 about axis A corresponds to a linear movement of horizontal beam 33 in a horizontal direction d perpendicular to the longitudinal axis of the bar, and along a vertical reference plane P immovable in space and containing both axes A and C.

With reference to Figures 3 and 4, in the example shown, half-arm 36 is defined by two supporting beams 39 connected at both ends by two parallelepiped-shaped spacers 40, one of which is hinged to the stiffening plate of supporting member 31 by a cylindrical through pin 41 extending coaxially with axis A through the body of the stiffening plate and the body of spacer 40.

In the example shown, cylindrical pin 41 of half-arm 36 is fitted rigidly to spacer 40, and is fitted in rotary manner to the body of the stiffening plate of supporting member 31 with the interposition of known rolling bearings.

Like half-arm 36, half-arm 37 is defined by two supporting beams 42 connected at both ends by two parallelepiped-shaped spacers 43, one of which is hinged to the spacer 40 at the free end of half-arm 36 by a cylindrical through pin 44 extending coaxially with axis B through the body of spacer 40 and the body of spacer 43. Cylindrical pin 44 of half-arm 37 is fitted rigidly inside the body of spacer 43, and is fitted in rotary manner to the body of spacer 40 with the interposition of known rolling bearings.

With reference to Figures 2, 3 and 4, push member 30 also comprises an actuating assembly 45 for moving the articulated arm, and which, on command, rotates cylindrical pin 41 about axis A to rotate half-arm 36 about axis A, and half-arm 37 about axis B, so as to open articulated arm 32 scissor-fashion.

In the example shown, actuator assembly 45 comprises an electric step motor, with encoder shaft position control, which is fitted to the stiffening plate of supporting member 31, and is connected mechanically to cylindrical pin 41 to real-time control the angular position of cylindrical pin 41. More specifically, as of a given angular reference position, in which half-arms 36 and 37 are positioned parallel and facing (Figures 2 and 3), actuating assembly 45 provides for rotating cylindrical pin 41 clockwise or anticlockwise about axis A by any angle, preferably, though not necessarily, ranging between 0° and 90°.

With reference to Figure 4, by rotating cylindrical pin 41 clockwise or anticlockwise up to a maximum of 90°, half-arms 36 and 37 can be opened scissor-fashion to gradually extend articulated arm 32 on one side or the other of the two horizontal cross members 34, and to move horizontal beam 33 in horizontal direction d from one side to the other of the two horizontal cross members 34, from a parking position (not shown), in which horizontal push beam 33 is positioned perfectly beneath cylindrical pin 41 (axes A and C coincident), to a maximum distance from the stiffening plate of supporting member 31, equal to the sum of the "useful lengths" or distances between the axes of half-arms 36 and 37, i.e. equal to twice length L₁ or L₂.

It should be pointed out that articulated arm 32 is in the parking position when half-arms 36 and 37 are positioned one beneath the other, perfectly parallel and facing each other, i.e. when cylindrical pin 41 is in said given angular reference position.

In the example shown, since half-arms 36 and 37 in the parking position are parallel to the longitudinal axes of the two horizontal cross members 34, the vertical reference plane P along which the central point of horizontal beam 33 moves is perpendicular to the longitudinal axes of horizontal cross members 34.

With reference to Figures 3 and 4, in the example shown, the cascade gear train 38, which synchronizes the movement of half-arm 37 about axis B with the movement of half-arm 36 about axis A, comprises a main gear 46 fitted for rotation to cylindrical pin 41 of half-arm 36, between the stiffening plate and spacer 40; a secondary gear 47 fitted rigidly to the end of cylindrical pin 44 of half-arm 37, on the opposite side to spacer 43; and a drive chain 48 looped about gears 46 and 47.

Gear 46 is also fixed rigidly to the body of the stiffening plate of supporting member 31, and has an outside diameter which is twice that of gear 47, so that gear 47 is forced to rotate about axis B at twice the angular speed of gear 46.

With reference to Figures 3 and 4, in the example shown, horizontal push beam 33 is fixed to the free end of articulated arm 32 by a cylindrical fastening pin 50 projecting, coaxially with axis C, from spacer 43, which defines the free end of half-arm 37. More specifically, cylindrical fastening pin 50 of articulated arm 32 is mounted for rotation inside the body of spacer 43 with the interposition of known rolling bearings, and has a flanged end, to which horizontal beam 33 is fixed.

In the example shown, articulated arm 32 also has a second cascade gear train 51, which transmits the rotation of half-arm 37 with respect to half-arm 36 about axis B to cylindrical fastening pin 50 with a predetermined gear ratio, so that cylindrical fastening pin 50 rotates with respect to half-arm 37 about axis C in the opposite direction to that in which cylindrical pin 44 rotates about axis B inside spacer 40 of half-arm 36, and at an angular speed equal to half the rotation speed of cylindrical pin 44.

When parting half-arms 36 and 37, i.e. when extending articulated arm 32, cascade gear train 51 therefore rotates cylindrical fastening pin 50 about axis C inside spacer 43 of half-arm 37 in phase opposition with respect to half-arm 37, so as to compensate the rotation of half-arm 37 about axis B. More specifically, cascade gear train 51 rotates cylindrical fastening pin 50 with respect to half-arm 37 - which itself rotates and translates - so that, to the observer, cylindrical fastening pin 50 and horizontal beam 33, integral with it, move in a straight line at all times in direction d, without rotating about said axis C.

In other words, cascade gear train 51 rotates cylindrical fastening pin 50 inside spacer 43 of half-arm 37 so that, when extending articulated arm 32, the longitudinal axis L of horizontal push beam 33 is maintained perfectly parallel to the longitudinal axes of the two horizontal cross members 34.

In a first embodiment not shown, cascade gear train 51 is substantially the same as cascade gear train 38, and comprises: a main gear fitted for rotation to cylindrical pin 44 of half-arm 37, between spacer 40 and spacer 43; a secondary gear fitted rigidly to the end of cylindrical fastening pin 50, on the opposite side to horizontal beam 33; and a drive chain looped about the above gears. In this case, too, the main gear is fixed rigidly to the body of spacer 40, and has an outside diameter which is half that of the secondary gear, so that the secondary gear is forced to rotate about axis C at half the angular speed of the main gear.

With reference to Figures 3 and 4, in a second embodiment, cascade gear train 51 comprises: a main gear 52 fitted for rotation to cylindrical pin 44 of half-arm 37, between spacer 40 and spacer 43; a secondary gear 53 fitted rigidly to the end of cylindrical fastening pin 50, on the opposite side to the flanged end; a drive chain 54 looped about gears 52 and 53; and a reduction gear 55 for transmitting rotation of cylindrical pin 44 about axis B to gear 52 with a predetermined reduction ratio.

More specifically, reduction gear 55 transmits rotation of cylindrical pin 44 to gear 52, so that gear 52 in turn rotates cylindrical fastening pin 50 about axis C and with respect to half-arm 37 at an angular speed equal to half the angular speed at which cylindrical pin 44 rotates about axis B with respect to half-arm 36.

More specifically, in the example shown, reduction gear 55 comprises: a first gear 56 fitted rigidly to cylindrical pin 44 of half-arm 37, just below spacer 40; a second gear 57 fitted to a supporting shaft 58 fitted to rotate freely, about an axis parallel to axis B, inside a third spacer 40' on half-arm 36; a third gear 59 fitted to shaft 58, just below gear 57; and a fourth gear 60 fitted to rotate freely on cylindrical pin 44 of half-arm 37, just over gear 52.

Gear 56 meshes with gear 57 which in turn rotates gear 59, while gear 60 is angularly integral with gear 52, and is connected mechanically to gear 59 by a drive chain (not shown) looped about gears 59 and 60.

As stated, the gear ratio between gears 56 and 57, the gear ratio between gears 59 and 60, and the gear ratio between gears 52 and 53 are selected to enable the cascade gear train as a whole to rotate cylindrical fastening pin 50 about axis C and with respect to half-arm 37 at an angular speed equal to half the angular speed at which cylindrical pin 44 rotates about axis B inside spacer 40 of half-arm 36.

With reference to Figure 4, as regards operation of push member 30, when actuating assembly 45 governing the articulated arm rotates half-arm 36 about axis A by an angle α, cascade gear train 38 rotates half-arm 37 about axis B with respect to half-arm 36 by an angle β equal to twice angle α (β=2α), while cascade gear train 51 rotates cylindrical fastening pin 50 in half-arm 37 about axis C by an angle γ equal to angle α (γ=α). Articulated arm 32 therefore moves horizontal push beam 33 in direction d, while maintaining the longitudinal axis L of horizontal beam 33 parallel at all times to itself and perpendicular to travelling direction d.

In other words, by acting on cylindrical pin 40, actuating assembly 45 moves articulated arm 32 so that horizontal beam 33 sweeps over the area beneath supporting member 31 to cover an area equal to twice the total length L_{C} of articulated arm 32, in turn equal to the sum of lengths L₁ and L₂. Obviously, actuating assembly 45 is also able to set horizontal beam 33 to any intermediate position.

Push member 30 is therefore able to push an entire row 6 of products along a horizontal plane from one side to the other of supporting member 31, and over a maximum distance equal to or less than twice the total length L_{C} of articulated arm 32.

Palletizing machine 1 also comprises a central control unit (not shown) for controlling linear conveyor 8, orienting and compacting unit 9, and building unit 10 to automatically form pallets 3 from a succession of individual products 2.

With reference to Figures 5, 6 and 7, operation of palletizing machine 1 will now be described assuming building platform 13 has just unloaded a layer 4 of products onto the top of pallet 3 being formed on work platform 7, and is about to commence building another layer 4.

With reference to Figure 5, in actual use, as building platform 13 is raised to position rim 18 directly over the top of pallet 3 being formed on work platform 7, transfer platform 14 extends articulated arm 32 to position horizontal beam 33 beyond orienting and compacting unit 9, and moves down to position horizontal shelf 29 alongside orienting and compacting unit 9 and substantially coplanar with the conveying surface of linear conveyor 8.

With reference to Figure 6, once horizontal shelf 29 is positioned on a level with the conveying surface of linear conveyor 8, actuating assembly 45 governing the articulated arm rotates cylindrical pin 41 to move horizontal beam 33 horizontally over horizontal shelf 29, and so transfer a row 6 of products from orienting and compacting unit 9 to horizontal shelf 29. After loading a row 6 of products, transfer platform 14 moves vertically into position on a level with layer building platform 13.

With reference to Figure 7, once the above position is reached, actuating assembly 45 governing the articulated arm rotates cylindrical pin 41 to move horizontal beam 33 horizontally over rim 18, and so transfer a row 6 of products from horizontal shelf 29 onto the supporting surface defined by supporting rollers 23 of movable shutter 19. The movement of horizontal beam 33 obviously takes into account the presence or not of one or more rows 6 of products already on movable shutter 19.

Once the row 6 of products is transferred onto building platform 13, horizontal beam 33 is positioned again over horizontal shelf 29, and transfer platform 14 goes back to pick up another row 6 of products prepared in the meantime by orienting and compacting unit 9.

Once transfer platform 14 has transferred enough rows 6 of products to form a layer 4, building platform 13 compacts and locks together the rows 6 forming layer 4, and then opens movable supporting shutter 19 to drop the entire layer 4 of products onto the top of pallet 3.

After depositing the predetermined number of layers 4 onto supporting pallet 5, building platform 13 is locked to the top of supporting frame 15, so that the completed pallet 3 can be removed, and another supporting pallet 5 deposited on work platform 7.

The advantages of palletizing machine 1 as described and illustrated herein are obvious: building unit 10, with only one push member 30 for loading and unloading rows 6 of products, provides for further reducing size as compared with currently marketed palletizing machines.

Another advantage of palletizing machine 1 is that actuating means 17 governing transfer platform 14 are designed to move a much lighter weight than on other machines (the rows 6 raised are now fewer than the total number of rows 6 in each layer 4), thus greatly reducing electricity consumption.

The same also applies to actuating means 16, which are now limited to raising the empty building platform 13 in steps, with no sharp acceleration or particular precision, and are therefore much simpler in design and, hence, cheaper.

Clearly, changes may be made to palletizing machine 1 as described and illustrated herein without, however, departing from the scope of the present invention, which is defined by the appended claims.

## Claims

1. A palletizing machine (1) for converting a succession of individual products (2) into a succession of pallets (3), each defined by a given number of stacked layers (4) of products (2); each layer (4) of products (2) being defined by a number of adjacent rows (6) of products (2); the palletizing machine (1) comprising a work platform (7) where each pallet (3) is formed in succession, a linear conveyor (8) for supplying a succession of loose products (2) alongside the work platform (7), and an orienting and compacting unit (9) for orienting and compacting the products, and which receives the loose products (2) from said linear conveyor (8) at the input, and supplies a succession of rows (6) of products (2) at the output; the palletizing machine (1) also comprising a layer building unit (10), which in turn comprises
a layer building platform (13) movable over said work platform (7) and for forming each layer (4) of products (2) and then depositing the layer (4) by gravity onto the top of the pallet (3) being formed on the work platform (7),
a row transfer platform (14) movable vertically alongside said building platform (13) to transfer one or more rows (6) of products (2) at a time from said orienting and compacting unit (9) to said building platform (13), and
a push member (30) for moving one or more rows (6) of products (2) at a time from said transfer platform (14) to said building platform (13); the palletizing machine (1) being **characterized in that** said push member (30) is adapted to move said rows (6) of products (2) also from said orienting and compacting unit (9) to said transfer platform (14).

2. A palletizing machine as claimed in Claim 1, **characterized in that** said transfer platform (14) comprises a horizontal shelf (29) movable vertically in the space between said orienting and compacting unit (9) and said building platform (13); and said push member (30) which is movable vertically over said horizontal shelf (29).

3. A palletizing machine as claimed in Claim 2, **characterized in that** said push member (30) is integral with said horizontal shelf (29).

4. A palletizing machine as claimed in Claim 2 or 3, **characterized in that** said push member (30) comprises a supporting member (31) mounted to move vertically over said horizontal shelf (29); an articulated arm (32), with a pantograph movement, fixed to and projecting from the supporting member (31) to move pantograph-fashion in a predetermined horizontal plane; and a horizontal push beam (33) fixed to the free end of the articulated arm (32) and which is positioned resting against a lateral side of the row (6) of products.

5. A palletizing machine as claimed in Claim 4, **characterized in that** said articulated arm (32) comprises a first half-arm (36) fitted to the body of said supporting member (31) to rotate about a first axis (A) of rotation with respect to said supporting member; a second half-arm (37) fitted to the body of said first half-arm (36) to rotate, with respect to said first half-arm, about a second axis (B) of rotation parallel to said first axis (A); and a first cascade gear train (38) for transmitting rotation of the first half-arm (36) about the first axis (A) to the second half-arm (37), so as to coordinate scissor-opening of said half-arms (36, 37) with rotation of the first half-arm (36) about the first axis (A).

6. A palletizing machine as claimed in Claim 5, **characterized in that** said first cascade gear train (38) transmits rotation of the first half-arm (36) about said first axis (A) to the second half-arm (37), so that the body of said second half-arm (37) is forced to rotate about the second axis (B) at an angular speed which is twice the angular speed at which the first half-arm (36) rotates about the first axis (A), and in the opposite rotation direction to that of the first half-arm.

7. A palletizing machine as claimed in Claim 6, **characterized in that** said first (36) and said second (37) half-arm are positioned horizontally one over the other, and said first axis (A) is vertical.

8. A palletizing machine as claimed in Claim 6 or 7, **characterized in that** said second half-arm (37) has a fastening pin (50) to which said horizontal push beam (33) is fixed; said fastening pin (50) being fitted to the body of said second half-arm (37) to rotate about a third axis (C) of rotation parallel to said first (A) and said second (B) axis; the distance (L₁) between said first (A) and said second (B) axis being equal to the distance (L₂) between said second (B) and said third (C) axis.

9. A palletizing machine as claimed in any one of Claims 5 to 8, **characterized in that** said push member (30) comprises an actuating assembly (45) for moving the articulated arm (32), and which, on command, rotates the first half-arm (36) about said first axis (A).

10. A palletizing machine as claimed in Claim 8 or 9, **characterized in that** said articulated arm (32) comprises a second cascade gear train (51), which transmits rotation of said second half-arm (37) about the second axis (B) with respect to said first half-arm (36) to said fastening pin (50) with a predetermined gear ratio, so that said fastening pin (50) rotates about said third axis (C) on said second half-arm (37) in the opposite direction to that in which the second half-arm (37) rotates about the second axis (B), and at an angular speed equal to half the rotation speed of the second half-arm.

## Patentansprüche

1. Palletiervorrichtung (1) zum Umsetzen einer Folge von individuellen Produkten (2) in eine Folge von Paletten (3), wobei jede durch eine gegebene Anzahl von gestapelten Schichten (4) von Produktes (2) definiert ist; wobei jede Schicht (4) von Produkten (2) durch eine Anzahl von angrenzenden Reihen (6) von Produkten (2) definiert ist; wobei die Palletiervorrichtung (1) eine Arbeitsplattform (7), wo jede Palette (3) in Folge gebildet wird, einen linearen Förderer (8) zum Zuführen einer Folge von losen Produkten (2) entlang der Arbeitsplattform (7), und eine Orientierungs- und Kompaktiereinheit (9) zum Orientieren und Kompaktieren der Produkte umfasst, und weiche die losen Produkte (2) von dem linearen Förderer (8) an dem Eingang aufnimmt, und eine Folge der Reihen (6) von Produkten (2) an dem Ausgang zuführt; wobei die Palletiervorrichtung (1) auch eine Schichtbildungseinheit (10) umfasst, welche wiederum eine Schichtbildungsplattform (13), welche über der Arbeitsplattform (7) bewegbar ist und zum Bilden jeder Schicht (4) von Produkten (2) und dann Ablagern der Schicht (4) durch Schwerkraft auf der Oberseite der Palette (3), welche auf der Arbeitsplattfoprm (7) gebildet wird; eine Reihentransferplattform (14), welche vertikal entlang der Bildungsplattform (13) bewegbar ist, um eine oder mehrere Reihen (6) von Produkten (2) jeweils von der Orientierungs- und Kompaktiereinheit (9) zu der Bildungsplattform (13) zu transferieren; und ein Schiebeelement (30) zum Bewegen einer oder mehrerer Reihen (6) von Produkten (2) jeweils von der Orientierungs- und Kompaktiereinheit (9) zu der Transferplattform (14) umfasst; wobei die Palletiervorrichtung (1) **dadurch gekennzeichnet ist, dass** die Schiebeelemente (30) angepasst sind, um die Reihen (6) von der Transferplattform (14) zu der Bildungsplattform (13) zu bewegen.

2. Palletiervorrichtung gemäß Anspruch 1, **dadurch gekennzeichnet, dass** die Tranterplattform (14) ein horizontales Bord (29) umfasst, welches vertikal in dem Raum zwischen der Orientierungs- und Kompaktiereinheit (9) und der Bildungsplattform (13) bewegbar ist; und durch das Schiebeelement (30), welches vertikal über dem horizontalen Bord (29) bewegbar ist.

3. Palletiervorrichtung gemäß Anspruch 2, **dadurch gekennzeichnet, dass** das Schiebelement (30) integral mit dem horizontalen Bord (29) ausgebildet ist.

4. Palletiervorrichtung gemäß Anspruch. 2 oder 3, **dadurch gekennzeichnet, dass** das Schiebeelement (30) ein Trägerelement (31), welches montiert ist, um sich vertikal über dem horizontalen Bord (29) zu bewegen; einen gelenkigen Arm (32) mit einer Pantographbewegung, welcher fixiert ist an und hervorsteht von dem Trägerelement (31), um sich pantographartig in einer vorbestimmten horizontalen Ebene zu bewegen; und einen horizontalen Schiebeträger (33) umfasst, welcher fixiert ist an das freie Ende des gelenkigen Arms (32), und welcher an einer lateralen Seite der Reihe (6) von Produkten aufsitzend positioniert ist.

5. Palletiervorrichtung gemäß Anspruch 4, **dadurch gekennzeichnet, dass** der gelenkige Arm (32) einen ersten Halbarm (36), welcher an dem Körper des Trägerelements (31) angebracht ist, um um eine erste Achse (A) der Rotation hinsichtlich des Trägerelements zu drehen; einen zweiten Halbarm (37), welcher an dem Körper des ersten Halbarms (36) angebracht ist, um hinsichtlich des ersten Halbarms um eine zweite Achse (B) der Drehung parallel zu der ersten Achse (A) zu drehen; und einen ersten Kaskadengetriebezug (38) zum Übertragen der Rotation des ersten Halbarms (36) um die erste Achse (A) zu dem zweiten Halbarm (37) umfasst, um so eine Scherenöffnung der Halbarme (36, 37) mit der Drehung des ersten Halbarms (36) um die erste Achse (A) zu koordinieren.

6. Palletiervorrichtung gemäß Anspruch 5, **dadurch gekennzeichnet, dass** der erste Kaskadengetriebezug (38) eine Rotation des ersten Halbarms (36) um die erste Achse (A) zu dem zweiten Halbarm (37) überträgt, so dass der Körper des zweiten Halbarms (37) gezwungen wird, um die zweite Achse (B) mit einer Winkelgeschwindigkeit zu drehen, welche doppelt so viel wie die Winkelgeschwindigkeit ist, mit welcher der erste Halbarm (36) um die erste Achse (A) dreht, und in der entgegen gesetzten Rotationsrichtung zu derjenigen des ersten Halbarms.

7. Palletiervorrichtung gemäß Anspruch 6, **dadurch gekennzeichnet, dass** der erste (36) und der zweite (37) Halbarm horizontal einer über dem anderen positioniert sind, und wobei die erste Achse (A) vertikal ist.

8. Palletiervorrichtung gemäß Anspruch 6 oder 7, **dadurch gekennzeichnet, dass** der zweite Halbarm (37) einen Befestigungsstift (50) aufweist, an welchem der horizontale Schiebeträger (33) fixiert ist; wobei der Befestigungsstift (50) an dem Körper des zweiten Halbarms (37) befestigt ist, um um eine dritte Achse (C) der Drehung parallel zu der ersten (A) und der zweiten (B) Achse zu drehen; wobei der Abstand (L₁) zwischen der ersten (A) und der zweiten (B) Achse gleich zu dem Abstand (L₂) zwischen der zweiten (B) und der dritten (C) Achse ist.

9. Palletiervorrichtung gemäß irgendeinem der Ansprüche 5 bis 8, **dadurch gekennzeichnet, dass** das Schiebeelement (30) einen Aktuatoraufbau (45) zum Bewegen des gelenkigen Arms (32) umfasst, und welcher, auf Befehl, den ersten Halbarm (36) um die erste Achse (A) dreht.

10. Palletiervorrichtung gemäß Anspruch 8 oder 9, **dadurch gekennzeichnet, dass** der gelenkige Arm (32) einen zweiten Kaskadengetriebezug (51) umfasst, welcher eine Rotation von dem zweiten Halbarm (37) um die zweite Achse (B) hinsichtlich des ersten Halbarms (36) zu dem Befestigungsstift (50) mit einem vorbestimmten Übersetzungsverhältnis überträgt, so dass der Befestigungsstift (50) um die dritte Achse (C) auf dem zweiten Halbarm (37) in der entgegen gesetzten Richtung zu derjenigen, dreht, in welcher der zweite Halbarm (37) um die zweite Achse (B) dreht, und mit einer Winkelgeschwindigkeit, welche gleich der Hälfte der Drehgeschwindigkeit des zweiten Halbarms ist.

## Revendications

1. Machine de palettisation (1) permettant de convertir une succession de produits individuels (2) en une succession de palettes (3), chacune étant définie par un nombre donné de couches empilées (4) de produits (2) ; chaque couche (4) de produits (2) étant définie par un nombre de rangées adjacentes (6) de produits (2) ; la machine de palettisation (1) comprenant une plateforme de travail (7) où chaque palette (3) est formée en succession, un convoyeur linéaire (8) permettant d'approvisionner une succession de produits en vrac (2) le long de la plateforme de travail (7), et une unité d'orientation et de compactage (9) permettant d'orienter et de compacter les produits, et qui reçoit les produits en vrac (2) dudit convoyeur linéaire (8) à l'entrée, et approvisionne une succession de rangée (6) de produits (2) à la sortie ; la machine de palettisation (1) comprenant également une unité de constitution de couches (10), qui comprend à son tour
une plateforme de constitution de couches (13) pouvant être déplacée sur ladite plateforme de travail (7) et permettant de former chaque couche (4) de produits (2) puis de déposer la couche (4) par gravité sur le dessus de la palette (3) formée sur la plateforme de travail (7), une plateforme de transfert de rangées (14) pouvant être déplacée verticalement le long de ladite plateforme de constitution (13) pour transférer une rangée (6) ou plus de produits (2) à la fois depuis ladite unité d'orientation et de compactage (9) vers ladite plateforme de constitution (13), et
un élément de poussée (30) permettant de déplacer une rangée ou plus (6) de produits (2) à la fois depuis ladite plateforme de transfert (14) vers ladite plateforme de constitution (13) ; la machine de palettisation (1) étant **caractérisée en ce que** ledit élément de poussée (30) est adapté pour déplacer lesdites rangées (6) de produits (2) également depuis ladite unité d'orientation et de compactage (9) vers ladite plateforme de transfert (14).

2. Machine de palettisation selon la revendication 1, **caractérisée en ce que** ladite plateforme de transfert (14) comprend une tablette horizontale (29) pouvant être déplacée verticalement dans l'espace entre ladite unité d'orientation et de compactage (9) et ladite plateforme de constitution (13) ; et ledit élément de poussée (30) qui peut être déplacé verticalement sur ladite tablette horizontale (29).

3. Machine de palettisation selon la revendication 2, **caractérisée en ce que** ledit élément de poussée (30) est solidaire dudit plateau horizontal (29).

4. Machine de palettisation selon la revendication 2 ou 3, **caractérisée en ce que** ledit élément de poussée (30) comprend un élément de soutien (31) monté pour se déplacer verticalement sur ladite tablette horizontale (29) ; un bras articulé (32), avec un mouvement de pantographe, fixé à et faisant saillie de l'élément de soutien (31) pour se déplacer, à la façon d'un pantographe, dans un plan horizontal prédéterminé ; et une barre horizontale de poussée (33) fixée à l'extrémité libre du bras articulé (32) et qui est positionnée de façon à reposer contre un côté latéral de la rangée (6) de produits.

5. Machine de palettisation selon la revendication 4, **caractérisée en ce que** ledit bras articulé (32) comprend un premier demi-bras (36) fixé au corps dudit élément de soutien (31) pour tourner autour d'un premier axe (A) de rotation par rapport audit élément de soutien ; un second demi-bras (37) fixé au corps dudit premier demi-bras (36) pour tourner, par rapport audit premier demi-bras, autour d'un second axe (B) de rotation parallèle audit premier axe (A) ; et un premier train d'engrenages en cascade (38) permettant de transmettre la rotation du premier demi-bras (36) autour du premier axe (A) au second demi-bras (37), afin de coordonner l'ouverture en ciseaux desdits demi-bras (36, 37) avec rotation du premier demi-bras (36) autour du premier axe (A).

6. Machine de palettisation selon la revendication 5, **caractérisée en ce que** le premier train d'engrenages en cascade (38) transmet la rotation du premier demi-bras (36) autour dudit premier axe (A) au second demi-bras (37), de sorte que le corps du second demi-bras (37) est forcé à tourner autour du second axe (B) à une vitesse angulaire qui est le double de la vitesse angulaire à laquelle le premier demi-bras (36) tourne autour du premier axe (A), et dans le sens de rotation opposé à celui du premier demi-bras.

7. Machine de palettisation selon la revendication 6, **caractérisée en ce que** ledit premier (36) et ledit second (37) demi-bras sont positionnés horizontalement l'un sur à l'autre, et ledit premier axe (A) est vertical

8. Machine de palettisation selon la revendication 6 ou 7, **caractérisée en ce que** ledit second demi-bras (37) possède un pivot de fixation (50) auquel ladite barre horizontale de poussée (33) est fixée ; ledit pivot de fixation (50) étant adapté au corps dudit second demi-bras (37) de manière à tourner autour d'un troisième axe (C) de rotation parallèle audit premier axe (A) et audit second axe (B) ; la distance (L₁) entre ledit premier axe (A) et ledit second axe (B) étant égale à la distance (L₂) entre ledit second axe (B) et ledit troisième axe (C).

9. Machine de palettisation selon l'une quelconque des revendications 5 à 8, **caractérisée en ce que** ledit élément de poussée (30) comprend un ensemble d'actionnement (45) permettant de déplacer le bras articulé (32), et qui, sur commande, fait tourner le premier demi-bras (36) autour dudit premier axe (A).

10. Machine de palettisation selon la revendication 8 ou 9, **caractérisée en ce que** ledit bras articulé (32) comprend un second train d'engrenages en cascade (51), qui transmet la rotation dudit second demi-bras (37) autour du second axe (B) par rapport audit premier demi-bras (36) à ledit pivot de fixation (50) avec un rapport d'engrenage prédéterminé, de sorte que ledit pivot de fixation (50) tourne autour dudit troisième axe (C) sur ledit second demi-bras (37) dans le sens opposé à celui dans lequel le second demi-bras (37) tourne autour du second axe (B), et à une vitesse angulaire égale à la moitié de la vitesse de rotation du second demi-bras.
